# EUROPEAN PATENT APPLICATION

(11) **EP 1 868 354 A1**
(43) Date of publication of application: **19.12.2007**
(21) Application number: 06115333.4
(22) Date of filing: 12.06.2006
(51) Int. Cl.: H04L 29/12, H04L 12/12

(54) **System and method for handling address resolution protocol requests**

(71) Applicant: Research In Motion Limited, Waterloo, Ontario N2L 3W8 (CA)
(72) Inventor: Wang, James, Richmond Hill Ontario L4C 9H3 (CA); Dunk, Craig, Guelph Ontario N1L 1 P2 (CA)
(74) Representative: Rickard, David John

(57) **Abstract**

A system and method for handling address resolution protocol requests at an intermediary device in a local area network. The intermediary device has an address resolution protocol cache for mapping Internet protocol addresses to physical layer addresses for devices in the local area network. The intermediary device receives a multicast address resolution protocol request having an Internet protocol address for a device on the local area network. The address resolution protocol address contained in the multicast address resolution protocol request is extracted and the address resolution protocol cache is accessed to seek to obtain a physical layer address mapped to the extracted Internet protocol address. As a result, a directed address resolution protocol request is forwarded from the intermediary device to the local area network device corresponding to the physical layer address obtained from the intermediary device data memory.

## Description

Hand-held data processing devices are frequently wireless and allow users to communicate with a variety of other devices and systems over networks using the widely implemented Internet Protocol ("IP"). Each device accessible using the IP has an assigned IP address during the time that the device is accessible. Communication is established between devices using the IP based on the assigned IP addresses of the devices. An individual device may have different IP addresses over time. In addition, for communication at the physical transport layer, devices are provided with physical addresses such as Media Access Control ("MAC") addresses.

In systems compliant with IP, the mapping between IP addresses and MAC addresses for accessible devices (including hand-held data processing devices) in a local network, for example, are determined using the Address Resolution Protocol ("ARP"). Typically, for communication in a local network in the IP environment, a device is able to send messages to the intended recipient using the physical layer address (MAC address) for the recipient device. When a sending device seeks to initiate communication but the sending device does not have the recipient device MAC address in its memory, the sending device may first send an ARP request. Such an ARP request is multicast by the sending device on the local network to find the MAC address owner for the IP address being sought. The ARP request includes the IP address of the recipient device. In a basic configuration, in a wireless local area network ("WLAN") environment, each device in the WLAN will receive and process the ARP request, and only the recipient device (the device with the specified IP address) will reply to the request by providing a packet to the sending device which includes the recipient device's identifying MAC address. Such an approach, although effective in determining whether an IP address maps to a reachable device on the local network, will potentially result in multiple devices processing ARP requests which each relates to other devices on the local network.

To provide for more efficient network communication, it is known to provide many, if not all devices in a local network with ARP caches. An ARP cache includes data stored in memory to reflect mappings of IP addresses to MAC addresses and vice versa. This type of ARP cache may typically be found at a Dynamic Host Configuration Protocol ("DHCP") server, at an access point for a local network such as a WLAN or in devices in the network that are expected to carry out repeated network communication in the local area network. Typically, the largest and most up to date of such ARP caches is found on a DHCP server or an access point.

However, such ARP caches may become out of date or contain inaccurate information, for example, in computing environments where devices are mobile (such as laptops and wireless hand-held devices). The operation of network communication functions that rely on the integrity of the ARP cache data may be adversely affected if the ARP cache data does not accurately reflect the devices that are currently reachable on the local network. In some cases, ARP requests are managed based on such ARP cache data and in those cases, if the ARP cache is out of date, the management of ARP requests by reference to the ARP cache may result in inefficient network operation.

It would accordingly be advantageous to provide for ARP request management without complete reliance on ARP cache data, while avoiding the inefficiencies of broadcasting or multicasting ARP requests to all devices on a defined local network.

### Brief Description of the Drawings

In drawings which illustrate an embodiment of the invention by way of example only,
FIG. 1 is a schematic diagram showing an example configuration of devices for forwarding and receiving address resolution protocol requests in accordance with the preferred embodiment.
FIG. 2 is a schematic diagram showing a further example configuration of devices for forwarding and receiving address resolution protocol requests in accordance with the preferred embodiment.

### Description of Preferred Embodiments

According to an aspect of the invention there is preferably provided an improved method for handling address resolution protocol requests.

In accordance with an aspect of the invention there is preferably provided a computing-device program product for handling address resolution protocol requests, the computing-device program product including code executable on an intermediary device in a local area network, the intermediary device including data memory for mapping Internet protocol address to physical layer addresses for devices in the local area network, the code being operable on the intermediary device to receive a multicast address resolution protocol request having an Internet protocol address for a device on the local area network, the code being further operable, on receipt of the multicast address resolution protocol request, to extract the address resolution protocol address contained in the multicast address resolution protocol request, the code being further operable to access the data memory in the intermediary device to obtain a physical layer address mapped to the extracted Internet protocol address if the Internet protocol address is present in the data memory, and the code being further operable to forward a directed address resolution protocol request to the local area network device corresponding to the physical layer address obtained from the intermediary device data memory.

In accordance with another aspect of the invention there is preferably provided the above computing-device program product in which the data memory in the intermediary device includes an address resolution protocol cache and in which the physical layer addresses stored in the cache are media access control addresses.

In accordance with another aspect of the invention there is preferably provided the above program product in which the intermediary device is an access point and in which the local area network includes devices which are reachable only by using the access point.

In accordance with another aspect of the invention there is preferably provided the above computing-device program product in which the intermediary device is a DHCP server.

In accordance with another aspect of the invention there is preferably provided the a computing device implemented method for handling address resolution protocol requests, the method being implemented on an intermediary device in a local area network, the intermediary device including data memory for mapping Internet protocol addresses to physical layer addresses for devices in the local area network, the method including the following steps:
receiving a multicast address resolution protocol request having an Internet protocol address for a device on the local area network,
extracting the address resolution protocol address contained in the multicast address resolution protocol request,
accessing the data memory in the intermediary device to obtain a physical layer address mapped to the extracted Internet protocol address if the Internet protocol address is present in the data memory, and
forwarding a directed address resolution protocol request to the local area network device corresponding to the physical layer address obtained from the intermediary device data memory.

Advantages of the preferred embodiment of the invention may include the reduction of ARP requests sent to devices where the devices have eMAC addresses that are different from the MAC addresses being sought in the ARP requests. Further advantages may include the reduction in power-consumption (and corresponding increase in availability of the battery) for wireless hand-held devices operating in a local network which supports ARP requests as a result of fewer such ARP requests being received by such wireless hand-held devices.

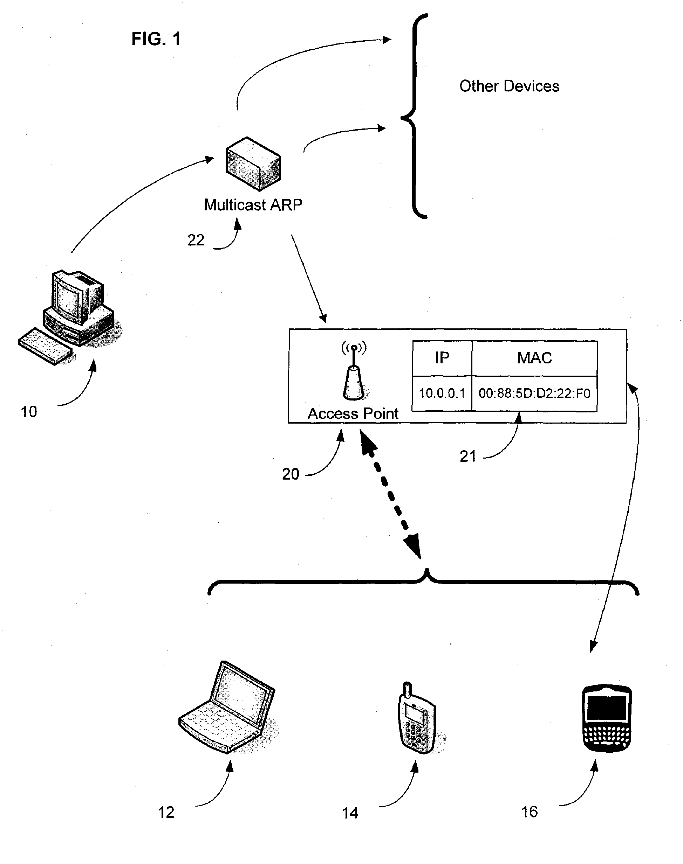

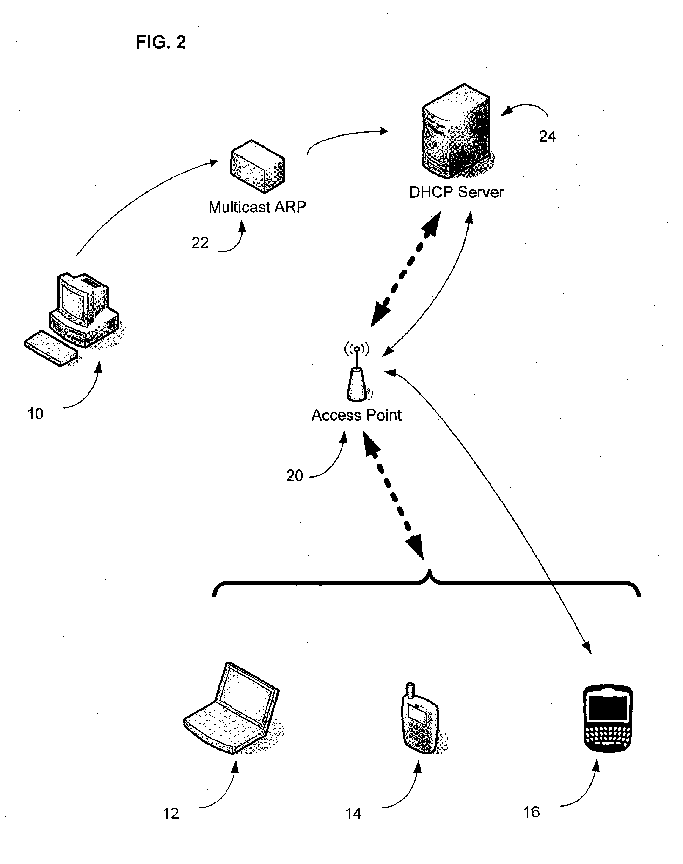

The preferred embodiment is described with reference to the schematic diagrams of FIG. 1 and FIG. 2, showing example configurations of devices forwarding and receiving address resolution protocol requests in accordance with the preferred embodiment. The approach of the preferred embodiment is particularly advantageous where devices in a network include hand-held data processing devices having limited battery life. However, it will be appreciated that the principles of the system apply to configurations of devices which do not have such battery-life constraints and the system and method described are not intended to be limited thereby. The preferred embodiment may be implemented as a computing device program product that includes program code for operation on a device to carry out the steps in the process described. The computing device program product may be embodied in, and delivered to an intended recipient device by, signals carried by networks, including the Internet, or may be embodied in media such as magnetic, electronic or optical storage media. The process described may be carried out by a combination of executable code and hardware embodied in a computing device. It is contemplated that the preferred embodiment may be implemented on computing devices (intermediary devices) intended to provide access to and from the Internet by and for devices in a defined local network such as a WLAN. Such intermediary devices as access points and DHCP servers are described in examples presented below.

FIG. 1 shows a source device 10 seeking to initiate communication with a destination device in a local network to which source device 10 belongs. In FIG. 1 devices 12, 14, 16 are shown as examples of devices (laptop, telephone and hand-held data processor, respectively) in a defined local network including device 10. FIG. 1 also shows access point 20 through which communications from device 10 may reach devices 12, 14, 16 in the local network (as is depicted by the heavy dashed line between the collection of devices 12, 14, 16 and access point 20).

In the preferred embodiment, access point 20 maintains records in which the MAC address for the devices 12, 14, 16 are associated with current IP addresses for the devices. The collection of records, and the functionality to provide access to such records, is referred to as an ARP cache. An example record is shown in simplified ARP cache 21 in FIG. 1. ARP cache 21 associates IP address 10.0.0.1 with physical layer or MAC address 00:88:5D:D2:22:F0.

It is typical for devices in an IP environment local area network to each maintain an ARP cache. By maintaining such ARP cache records, devices are able to communicate using the MAC addresses of other devices in the local network. However, such ARP cache content is often dynamic and variable with the result that it is typical for a device in the local network to carry out communication process steps seeking to communicate with another device in the local area network without the sending device having the MAC address of the recipient device in the ARP cache or other memory of the sending device.

FIG. 1 shows device 10 seeking to establish communication with device 16. At the time that the communication is being established by device 10, the device does not have the MAC address of device 16 in an ARP cache or other memory, although it does have the IP address for device 16 (10.0.0.1 in this example). According to the protocol, using IP, the system of device 10 executes code to generate and communicate an ARP request (for example, WHOIS 10.0.0.1). In accordance with ARP, the ARP request is multicast in the local area network by the operations carried out by device 10. This is shown schematically in FIG. 1 by multicast ARP request packet 22. As the various arrows emanating from packet 22 in FIG. 1 suggest, multicast request packet 22 is sent to, and capable of being received by, multiple devices reachable by device 10 using IP and the available local area network connections of device 10. In the example shown in FIG. 1 multicast ARP request packet 22 is received by, amongst other devices, access point 20. ARP request packet 22 includes the IP address (the target IP address 10.0.0.1)for device 16, the device with which device 10 intends to communicate. As is referred to again below, and is shown in FIG. 1, the local area network shown is configured such that devices 12, 14, 16 in the local area network are reachable by device 10 only by way of access point 20.

According to the preferred embodiment, access point 20 includes executable program product code operable to receive ARP request packet 22, to obtain from the packet the target IP address, and to determine whether the ARP cache for access point 20 contains that target IP address. If the data stored on access point 20 indicates that the IP address is assigned to one of the devices 12, 14, 16, then the code executable on access point 20 is operable to forward the ARP request to the appropriate device (as unicast, or directed, traffic).

In the example of FIG. 1, the ARP request includes the IP address assigned to device 16. Consequently, the program code executable on access point 20 operates to look up that IP address in the ARP cache maintained on access point 20. In the example of FIG. 1, access point 20 does include an entry in ARP cache 21 corresponding to the IP address for device 16 (in the example shown in FIG. 1, IP address 10.0.0.1 maps to MAC address 00:88:5D:D2:22:F0, which is the MAC address for device 16). Consequently, according to the preferred embodiment, the code executable on access point 20 operates to forward a directed ARP request only to the device with MAC address 00:88:5D:D2:22:F0 which in FIG. 1 is device 16 (as is shown by the arrow from access point 20 to device 16 in FIG. 1). Upon receipt by device 16 of the ARP request forwarded by access point 20, device 16 executes code to confirm that it is the device to which the IP address is assigned and returns the MAC address for device 16 as the ARP requires (in other words, device 16 sends an ARP response). FIG. 1 shows the forwarding of the ARP request to device 16, and the response to access point 20 as a double-headed arrow connecting the two devices.

As will be appreciated from the above description, the ARP request embodied by multicast ARP request packet 22 is not, in the preferred embodiment, received or processed by either devices 12 or 14. In this way, resources (such as battery life) of those devices 12, 14 are not consumed in responding to ARP requests which are related to other devices (device 16 in the above example). In some networks, access point 20 functions to use its ARP cache to respond to ARP requests as an alternative to forwarding such requests on to other devices. The preferred embodiment differs from such a system in that the preferred embodiment provides for confirmation by the device itself that it is reachable in the local area network.

The example of FIG. 1 shows access point 20 as being a point in the network that receives multicast ARP request packet 22 before any one of devices 12, 14, 16 are able to receive the packet. An advantage of the preferred embodiment is achieved through such a network configuration as, given the operation of the program code in access point 20 in response to receiving packet 22, neither device 12 nor device 14 will receive that ARP request that is intended for device 16. This advantage is achievable where, relative to device 10, the devices 12, 14, 16 are located behind access point 20 in the network shown in FIG. 1 (ie. for device 10 to reach devices 12, 14, 16, packets are directed through access point 20). As will be appreciated, in the example of FIG. 1, devices 12, 14, 16 communicate with each other in the local network by communication through access point 20. In both types of communication access point 20 is an intermediate device for communication between sending and receiving devices in the local network. As is referred to elsewhere in this description, other devices carrying out similar functions to an access point may act as intermediary devices in alternative implementations of the preferred embodiment.

In summary, according to the preferred embodiment, the set of mappings between IP addresses and MAC addresses at access point 20 (its ARP cache 21) will potentially permit a multicast request packet (packet 22) to be converted from a multicast request to a directed or unicast request. The result is that only the device whose MAC address maps to the target IP address in the data of access point 20 (i.e. in the ARP cache 21) receives the ARP request (in the example of FIG. 1, device 16). The ARP cache which sets out the IP address to MAC address mapping data stored in access point 20 is relied upon to allow the code executing on access point 20 to obtain the MAC address for device 16 (corresponding to the provided target IP address extracted from received ARP request multicast packet 22). By access point 20 sending an ARP request to device 16, it is possible for device 16 itself to respond to the ARP request and therefore the most accurate information is provided to device 10 in response to its ARP request. Because device 16 is a wireless hand-held data processing device, it is likely that from time to time device 16 will be removed from the vicinity of access point 20 and in such a case communication to that device using the local area network containing access point 20 will not be possible. If device 16 is recently removed from the vicinity of access point 20 at the time that the access point receives packet 22, the ARP cache 21at access point 20 may not be updated to reflect the fact that device 16 is unavailable in the local network. In such a case, the device will not be reachable by device 10 in the local area network, despite the ARP cache 21 mapping data at the access point indicating that the device with the target IP address for device 16 is available.

As will be seen from the schematic diagram of FIG. 2, a similar set of steps for ARP request management may be carried out by the appropriate code executable on a DHCP server (server 24). FIG. 2 shows an alternative network configuration in which the ARP request management of the preferred embodiment is carried out. In this network architecture, DHCP server 24 is part of the network and is shown being located between device 10 and access point 20. Devices 12, 14, 16 are, relative to device 10, behind access point 20 as was the case in the configuration of FIG. 1. In the simple example of FIG. 2, DHCP server 24 maintains an ARP cache (not shown) and has program code operable to access the DHCP server ARP cache on receipt by the server of multicast ARP request packet 22. In the manner described above for access point 20 with reference to FIG. 1, DHCP server 24 determines whether the IP address for device 16 is in its ARP cache on receiving packet 22. The ARP request is accordingly sent to device 16, via access point 20, as a directed or unicast packet by DHCP server 24 upon determining the MAC address for device 16 in the ARP cache of the DHCP server.

The initiating steps carried out by device 10, and the responding steps taken by one of devices 12, 14, 16 are, in the preferred embodiment, the same as those steps that are typically carried out in a system implementing ARP. The use of the IP address to MAC address mapping data in an intermediary device, such as DHCP server 24 or access point 20, however, allows for the multicast ARP request packet 22 to be sent only to the target device, as determined by the mapping data stored in DHCP server 24 or access point 20. As will be appreciated, the examples of access point 20 and DHCP server 24 are used for illustrative purposes. It is contemplated that other intermediary devices capable of storing IP address to MAC address mappings and which receive, process and forward ARP requests in a IP environment will be suitable for implementing the functionality described above.

Where the networked devices are hand-held wireless devices, there is a potential reduction in device resource usage (battery usage in particular) that may be achieved by unicasting ARP requests from a server, access point, or the like. Hand-held wireless data processing devices will "wake up" on receiving an ARP request and therefore if the number of requests are limited by only forwarding such requests to a device whose MAC address is found in the IP address to MAC address mapping data, there will be a potential reduction in processing time and energy to deal with ARP requests.

An embodiment having been thus described in detail by way of example, it will be apparent to those skilled in the art that variations and modifications may be made without departing from the invention.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A computing-device implemented method for handling address resolution protocol requests, the method being implemented on an intermediary device (20, 24) in a local area network, the intermediary device (20, 24) comprising data memory (21) for mapping Internet protocol addresses to physical layer addresses for devices in the local area network, the method comprising the following steps:
receiving a multicast address resolution protocol request (22) having an Internet protocol address for a device on the local area network,
extracting the Internet protocol address contained in the multicast address resolution protocol request (22),
accessing the data memory (21) in the intermediary device (20, 24) to obtain a physical layer address mapped to the extracted Internet protocol address if the Internet protocol address is present in the data memory, and
forwarding a directed address resolution protocol request to the local area network device (16) corresponding to the physical layer address obtained from the intermediary device data memory (21).

2. The method of claim 1 in which the data memory (21) in the intermediary device comprises an address resolution protocol cache and in which the physical layer addresses stored in the cache are media access control addresses, the step of accessing the data memory (21) in the intermediary device (20, 24) comprising the step of accessing the address resolution protocol cache to obtain the media access control address mapped to the extracted Internet protocol address.

3. The method of claim 1or claim 2 in which the steps implemented on the intermediary device (21) are implemented on an access point (20).

4. The method of any one of the preceding claims in which the local area network comprises devices (12, 14, 16) which are reachable only by using the access point (20).

5. The method of any one of the preceding claims in which the steps implemented on the intermediary device are implemented on a DHCP server (24).

6. A computing device for handling address resolution protocol requests, the computing device comprising program code being executable by the computing device for implementing the method of any one of claims 1 to 5.

7. An intermediary device (20, 24) in a local area network, the intermediary device (20, 24) comprising data memory (21), for mapping Internet protocol addresses to physical layer addresses for devices (12, 14, 16) in the local area network, and comprising program code executable on the intermediary device (20, 24),
the code being operable on the intermediary device (20, 24) to receive a multicast address resolution protocol request (22) having an Internet protocol address for a device on the local area network,
the code being further operable, on receipt of the multicast address resolution protocol request (22), to extract the Internet protocol address contained in the multicast address resolution protocol request,
the code being further operable to access the data memory (21) in the intermediary device to obtain a physical layer address mapped to the extracted Internet protocol address if the Internet protocol address is present in the data memory (21), and
the code being further operable to forward a directed address resolution protocol request to the local area network device corresponding to the physical layer address obtained from the intermediary device data memory.

8. A data processing system or network comprising at least one computing device according to claim 6 or claim 7.

9. A computer program product for for handling address resolution protocol requests received at an intermediary device (20, 24) in a local area network, the intermediary device (20, 24) comprising data memory (21) for mapping Internet protocol addresses to physical layer addresses for devices in the local area network, the computer program product comprising program code means executable by a computing device, system or apparatus for implementing the method of any one of claims 1 to 5.

## Amended claims

### Amended claims in accordance with Rule 137(2) EPC.

**1.** A computing-device implemented method for handling address resolution protocol requests, the method being implemented on a DHCP server (24) in a local area network, the DHCP server (24) comprising data memory (21) for mapping Internet protocol addresses to physical layer addresses for devices in the local area network, the method comprising the following steps:
receiving a multicast address resolution protocol request (22) having an Internet protocol address for a device on the local area network,
extracting the Internet protocol address contained in the multicast address resolution protocol request (22),
accessing the data memory (21) in the DHCP server (24) to obtain a physical layer address mapped to the extracted Internet protocol address if the Internet protocol address is present in the data memory, and
forwarding a directed address resolution protocol request to the local area network device (16) corresponding to the physical layer address obtained from the DHCP server data memory (21).

**2.** The method of claim 1 in which the data memory (21) in the DHCP server (24) comprises an address resolution protocol cache and in which the physical layer addresses stored in the cache are media access control addresses, the step of accessing the data memory (21) in the DHCP server (24) comprising the step of accessing the address resolution protocol cache to obtain the media access control address mapped to the extracted Internet protocol address.

**3.** A DHCP server (24) in a local area network, the DHCP server (24) comprising data memory (21) for mapping Internet protocol addresses to physical layer addresses for devices (12, 14, 16) in the local area network, and comprising program code executable on the DHCP server (24),
the code being operable on the DHCP server (24) to receive a multicast address resolution protocol request (22) having an Internet protocol address for a device on the local area network,
the code being further operable, on receipt of the multicast address resolution protocol request (22), to extract the Internet protocol address contained in the multicast address resolution protocol request,
the code being further operable to access the data memory (21) in the intermediary device to obtain a physical layer address mapped to the extracted Internet protocol address if the Internet protocol address is present in the data memory (21), and
the code being further operable to forward a directed address resolution protocol request to the local area network device corresponding to the physical layer address obtained from the DHCP server (24) data memory.

**4.** A data processing system or network comprising at least one DHCP server (24) according to claim 3.

**5.** A computer program product for handling address resolution protocol requests received at a DHCP server (24) in a local area network, the DHCP server (24) comprising data memory (21) for mapping Internet protocol addresses to physical layer addresses for devices in the local area network, the computer program product comprising program code means executable by the DHCP server (24) for implementing the method of claim 1 or claim 2.
